Europäisches Patentamt

European Patent Office

Office européen des brevets

(19)

(11) Publication number: **0 091 928**
**B1**

(12) **EUROPEAN PATENT SPECIFICATION**

(45) Date of publication of patent specification: **12.02.86**

(51) Int. Cl.⁴: **G 01 N 30/00**

(21) Application number: **82903160.8**

(22) Date of filing: **22.10.82**

(86) International application number:
**PCT/SE82/00345**

(87) International publication number:
**WO 83/01512 28.04.83 Gazette 83/10**

(54) **METHOD AND DEVICE FOR CONTINUOUS, AUTOMATIC AIR ANALYSIS.**

(30) Priority: **23.10.81 SE 8106288**

(43) Date of publication of application:
**26.10.83 Bulletin 83/43**

(45) Publication of the grant of the patent:
**12.02.86 Bulletin 86/07**

(84) Designated Contracting States:
**CH DE FR GB LI NL**

(56) References cited:
**SE-A-7 412 267**
**US-A-3 807 217**

**Derwent's abstract No. 36 772 E/18, SU 842 461**
**Analytical Chemistry vol. 46, no. 1, issued 1974**
**January, P.W. Williams et al, Purification of air**
**for use in gas chromatography as a carrier gas**
**and in a flame ionization detector.**

(73) Proprietor: **RITTFELDT, Lars Folke**
**Björnvägen 230**
**S-902 60 Umea (SE)**

(72) Inventor: **RITTFELDT, Lars Folke**
**Björnvägen 230**
**S-902 60 Umea (SE)**

(74) Representative: **Robinson, Marianne**
**Försvarets civilförvaltning Patent Section Box**
**80012 Östermalmsgatan 87**
**S-104 50 Stockholm (SE)**

## Description

### Technical Field

The present invention relates to a continuously working, automatic gas chromatograph that is useful for qualified air analyses, for instance for the determination and identification of extremely small contents of impurities in air. The gas chromatograph of the invention is small, compact, easily operated and portable and because of this, useful for qualitative and quantitative air analyses at the place of sampling, if so is desired. The invention particularly makes possible a simplified method for purification of the air in the sample to be used as carrier gas.

### Background Art

In a conventional gas chromatograph a definite amount of the sample is injected into a vaporization chamber for a quick vaporization thereof if the sample is in the liquid state. It is then carried by a carrier gas into a chromatograph column and through a detector for the analysis of the sample components. If the sample is in the gaseous state already from the beginning, it is injected directly into the carrier gas flow. As carrier gas helium, argon or nitrogen is usually used. It has also been suggested to use air as carrier gas. As the carrier gas must be dry and free from impurities, the air must in such a case be taken from a separate gas bottle or, when the atmospheric or ambient air is to be used, it must be purified before the use as carrier gas. For such a purpose it has up to now been required a relatively complicated purification equipment, for instance as described in U.S. patent 3,772,909. The gas chromatograph as a whole will then become relatively large and complicated.

### Disclosure of Invention

The present invention makes possible a simplified method of purifying the atmospheric or ambient air for use as carrier gas through column and detector as set out in claim 1. As one can utilize the air that is present at the very place of sampling and analysis, no separate gas source is required for the supply of carrier gas. This circumstance together with the fact that the gas chromatograph is battery operated and that you can go "down in scale", for instance by using a capillary column, contributes in making the gas chromatograph according to the invention small, simplified, portable and useful for field use. A device for performing the method of claim 1 is set out in claim 3.

When analyzing air one has previously been forced to carry out a preparatory step of sampling at the very place and to analyze the sample later on in a laboratory. As the gas chromatograph of the invention can be pre-calibrated for possible substances in the air and as it makes an analysis possible already at the sampling place, a very quick answer is obtained to the question if a certain substance is present in the air at a certain place and to what extent the substance is present, i.e. the percentage of substance. The gas chromatograph is of course also suitable for conventional laboratory use.

As those substances that are to be determined are concentrated in a pre-concentrating steps by means of an adsorbent before the analysis thereof, the gas chromatograph of the invention is, in spite of its compact construction, extremely sensitive and reliable and makes possible analysis of for instance nerve gases, dangerous substances at places of work, such as benzene, toluene, xylene etc, in so low contents of 0.005 mg/m$^3$.

Thus, the adsorbent in the pre-concentrating step has a double function, viz. to concentrate those substances in the air that are to be determined and to purify the air for the use thereof as carrier gas.

By arranging an air pump after the detector of the air analysis system, both a simplified sampling and a simplified purification of the air are obtained. The air pump is working all the time and draws the air at a constant speed through the adsorbent in the pre-concentrating stage, through the column and the detector. As the air pump is positioned after the detector, the risk of contamination of impurities deriving from the pump can be avoided.

As one also makes use of a computer, suitably a microcomputer, for the control of the gas chromatograph and for the preparation and presentation of the measurement results, the apparatus becomes very easy to operate, and so it can be used by not qualified personnel for analysis at the very place of sampling. Thus, a highly field-adapted analytical instrument is obtained.

### Brief Description of Drawings

The invention will now be described in more detail with reference to the attached drawings, where

Fig. 1 is a schematic diagram of the over-all construction of a gas chromatograph according to the invention;

Fig. 2 shows a suitable embodiment of the injector device;

Fig. 3 shows a suitable embodiment of the detector device; and

Fig. 4 is a principle outline of the working mode of the gas chromatograph.

### Best Mode for Carrying Out the Invention

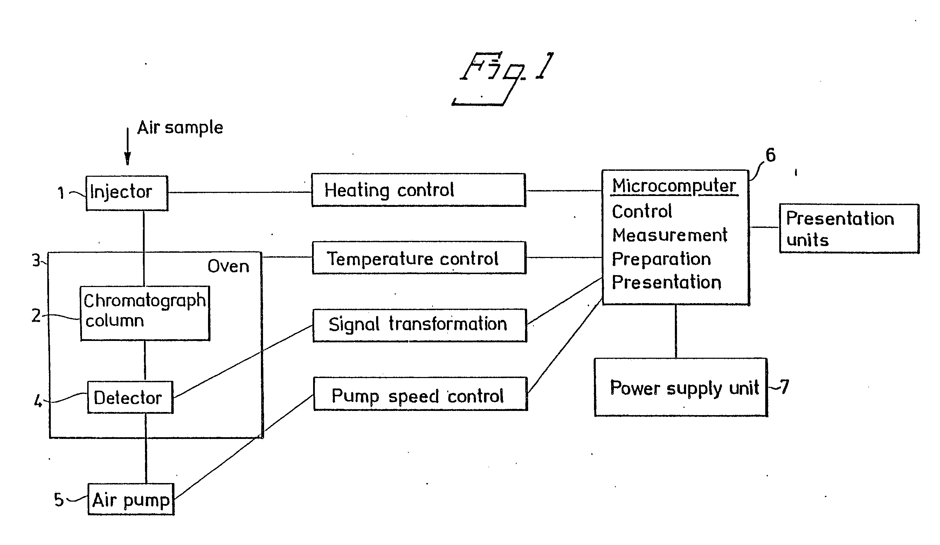

The gas chromatograph of Fig. 1 consists of an injector 1 with an adsorbent, also functioning as concentrating step, a chromatograph column 2 and a detector 4 disposed in a thermostat-controlled, with a fan provided oven 3, an air pump 5, a microcomputer 6 and a power supply unit 7, for instance a battery.

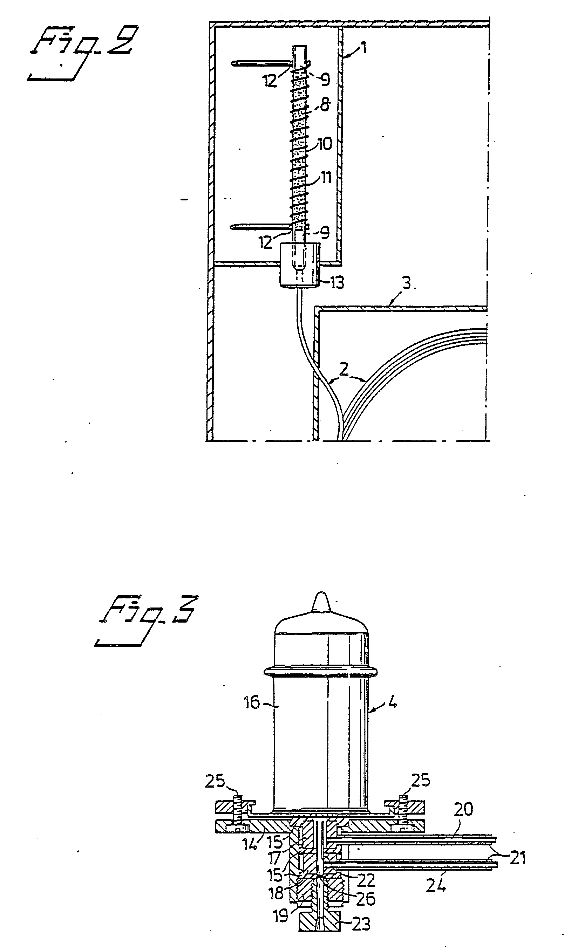

The injector 1 (see Fig. 2) suitably consists of a solid adsorbent material 8 in powder form, put between two glass-wool plugs 9 in a thin-walled glass tube 10 that is provided with an electric resistance wire in the form of a heating coil 11 wound round the tube. The heating coil connection to the power supply is designated 12. One end of the tube is connected directly to the chromatograph column 2 by means of a kind of quick-connective coupling via a rubber sealing joint 13. The other end opens directly to the ambient air but is so devised that it may be connected by means of a tubing, suitably of Teflon, to another air sample. The entire adsorbent tube is disconnectable, and so it can be used for sampling separately from the gas chromatograph, for instance at exposition measurements. The adsorbent material inside the tube is chosen taking into consideration what air contaminants that are to be analyzed. However, it must stand being heated during the heat desorption. Liquids, for instance high temperature boiling silicone oil, may also be used as adsorbent material.

The column 2 is suitably a capillary column in the form of a glass tube helix, the coil thereof having a diameter of 11 cm and a relatively large tube inner diameter (about 0.4 mm). The inner surface has been deactivated and coated with a stationary phase with temperature stability even when air is used as carrier gas. The stationary phase has a more or less slowing down effect on the components of the sample, and so they will leave the column separated from each other, making possible a separate detection thereof.

The oven 3 is designed to hold exactly the column 2 and the detector 4. The oven is well insulated with glass-wool or a similar fibre material and provided with a lining of thin aluminium foil so that the heat capacity will become low. The heating is carried out electrically by means of a resistance wire. The temperature is measured with a resistance sensor and is controlled by the microcomputer. There is a fan in order to avoid gradients and obtain a more effective temperature control.

The detector 4, connected directly to the column 2, is placed inside the oven 3. The choice of detection principle is made taking into consideration what substances there are to be analyzed. It is desirable, however, that the detector has a small dead volume, small size and high sensitivity for the substances in question. It should also function without detector gases. There are several detectors that meet said requirements, for instance for photoionization detector and piezoelectric crystals coated with a specific liquid film.

The detector may be so constructed that, besides being used for gas chromatography as has been described, it can also be used as a direct-reading detector. In the latter case the sample air is directly furnished into the detector without previously passing the pre-concentrating step and the chromatograph column. In this case there is obtained an instantaneous value of how much of impurities the sample air contains.

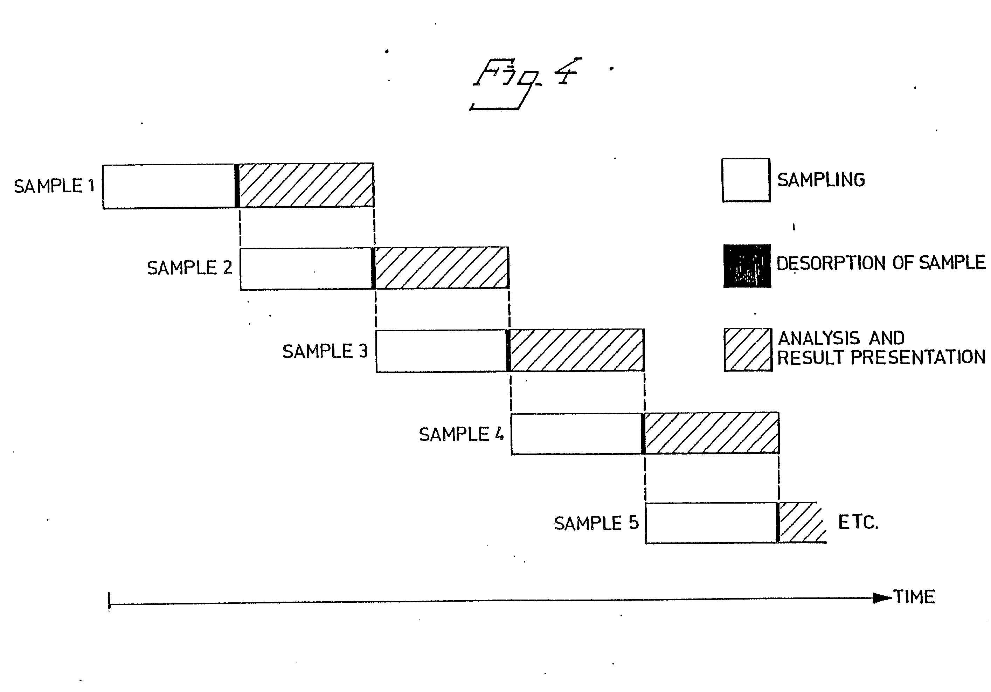

A suitable embodiment of the detector 4 is shown in Fig. 3. The detector is concentrically built in a holder 14, which by means of a double-threaded fixing screw 19, screw joints 25 and with intermediate insulations 15 of Teflon fixes an UV-lamp 16, a detector cell 17 and an anode 18 in a gastight way to each other. The sample air is drawn into the detector, either through a column connecting element 23 or through a direct-delivering tube 24. (Only one of said connections has an open communication with the sample air, and the shut-off device or switching device is positioned where the sample air is furnished into the gas chromatograph.) The air sample is brought centrically into the detector cell 17 through a tubular part 22 of the anode 18 and exhausted by suction through a tube 20. The two tubes 20 and 24, that are insulated with Teflon tubing 21, are also electric conduits for the ionization current that arises between the detector cell and the anode, i.e. the detector signal. In order to tighten the column connection to the detector there is also provided an O-ring gasket of rubber 26 between the anode 18 and the fixing screw 19 (between the column connecting element 23 and the insulation 15).

The air pump 5 is connected to the detector 4 via flow resistances and buffer volumes, in which way a continuous flow is obtained through the system. It is suitably of plunger type in order to achieve a sufficient suction height.

The microcomputer 6 is to control the oven temperature, the air pump and the heating of the adsorbent and to register detector signal and time, prepare and present measured values and results. The microcomputer is suitably of CMOS-type, which makes possible a battery operation of the gas chromatograph for about eight hours.

Additional equipment comprises among other things a key set for control instructions to the gas chromatograph, a display and a sound alarm device for direct-indication of detector signal, oven temperature etc and connecting taps for recorder, printer, external source of power supply and other fittings.

Working Mode and Applicability

The gas chromatograph is working continuously in accordance with the following (cf. Fig. 4):

A; The sample air is drawn in through the injector 1 during a preset time. The air contaminants will get caught on the adsorbent.

B; The adsorbent is heated during a short while. This is done almost instantaneously. It is then getting cooler and is functioning according to A;

C; Substances that are desorbed, when the adsorbent is heated, are drawn into the column 2, where they are subject to chromatography in the usual way but where the air is functioning as carrier gas. The adsorbent, which is now cold, purifies new sample air from contaminants, i.e. at the same time as the just desorbed substances are subject to chromatography, new sample is furnished to the adsorbent.

D; The detector 4 registers each of the substances individually as they leave the column.

E; The microcomputer 6 prepares the detector signal and presents the result qualitatively and quantitatively.

The next work cycle starts with the adsorbent being heated again (B;).

It can be observed that the air pump is working all the time and is drawing the air at an even speed through the adsorbent in the pre-concentrating step, the column and the detector.

The per se previously known principle of concentrating the air contaminants on an adsorbent before the chromatography and detection will here make the detection limit of the detector about 100 times better. This means that contents of about 0.01 mg/m$^3$ (benzene, toluene or xylene) can be determined by means of a photoionization detector without difficulty. The good separation ability of the capillary column makes it possible to determine for instance each of the xylene isomers individually.

Every amount determination that is carried out, becomes an average value of the content in question during the sampling period concerned. A timer period of 15 minutes is usual for industrial hygienic measurements.

By making the adsorbent tube connection in such a way that it is easily disconnectable, it can be used for exposition measurements, in which case sample air is collected from the breathing zone by means of a conventional, by a person carried air pump. As an alternative it is possible to carry the gas chromatograph about having a sampling hose, for instance of Teflon, opening out into the breathing zone. The described embodiment of the gas chromatograph is appreciated to have a weight of about 4 kilogrammes, and in this case it can be battery operated for about 4 hours. The measurement results that are collected, during for instance every quarter of an hour, are stored in a storage device and can later on be taken out and then plotted/tabulated.

The gas chromatograph can, as has previously been pointed out, also be so constructed that the detector can be used as a direct-reading instrument. To be able to change-over the gas chromatograph in an easy way to a direct-reading instrument is especially valuable at leak searches and so-called emission measurements at working places. It is also useful when one tries to make as quickly as possible a survey of the variations of a known substance in a room. It can also be used for comparison measurements, for instance when one wishes to make a comparison with the background signal in a gas chromatogram.

A microcomputer for control, preparation etc gives a great flexibility. It may for instance have stored values for retention times (identifiers), sensibility factors for the detector and hygienic limit values, for those substances that the analysis concerns. Besides, alarm functions can be released when limit values have been exceeded. It has capacity to run two or more measuring systems in the gas chromatograph at the same time, for instance for specific detectors or a direct-reading, quick detector. The presentation of measurement results can be done in several ways by means of the microcomputer, for instance with a direct-reading recorder/display or a table over collected measurement values. The greatest advantage with the computer is that it controls the gas chromatograph in such a way that it becomes an easily operated measuring system.

## Claims

1. A method relevant to a gas chromatograph for continuous, automatic, qualitative and quantitative air analysis, for instance for the determination and identification of extremely small amounts of substances present in air, the gas chromatograph comprising an injector, a pre-concentrating stage which comprises an adsorbent, heating means for heating the adsorbent to desorb the adsorbed substances, a chromatograph column, a detector, a computer for the control of the gas chromatograph, preparation and presentation of analysis results and a power supply unit, characterized in that the sample air is passed continuously and at a constant speed through the injector, the pre-concentrating stage which comprises the adsorbent, the column and the detector, during which period of time the said substances present in the air are adsorbed on the adsorbent in the pre-concentrating stage whereby the air is purified and is then used as carrier gas through the column and the detector, and then the adsorbent is briefly heated so that the substances that have become concentrated on the adsorbent in the pre-concentrating stage are desorbed and are carried by carrier gas, consisting of sample air previously purified in the pre-concentrating stage, through the column and detector for analysis thereof at the same time as new sample air being passed through the injector and the adsorbent in the pre-concentrating stage; this cycle of steps during said period of time being repeated, whereby a continuous sampling and analysis method is achieved.

2. Method according to claim 1, characterized in that the sample air is continuously drawn and at a constant speed through the injector, pre-concentrating stage, column and detector by means of an air pump disposed after the detector.

3. A device for carrying out the method according to claim 1 or 2 comprising an injector (1), also functioning as a preconcentrating stage for these substances that are to be analyzed which injector comprises an adsorbent (8) that can be briefly heated in order to desorb the substances adsorbed thereon; a temperature-controlled, fan-provided oven (3) comprising a capillary column (2) and a detector (4); a microcomputer (6) for the control of the device and preparation and presentation of analysis results; and a power supply device (7) characterized in that there is provided after the detector (4) an air pump (5) that draws the sample air at a constant speed via flow resistances and buffer volumes through the injector (1), the capillary column (2) and the detector (4), the air that is present in the sample forming a carrier gas through the capillary column and the detector for those substances that are to be analyzed.

4. Device according to claim 3, characterized in that the injector (1) comprises an adsorbent material (8) in powder form which is held together by means of two glass-wool plugs (9) in a thin-walled glass tube (10), which tube is provided with a helix-formed resistance wire (11) tightly wound round it, the ends of the resistance wire being fixed to the glass tube (10) by means of two metal rings (12), which rings at the same time act as electrical connections through which a current is fed to and, in a short time, heats the resistance wire, the glass tube and the adsorbent material.

5. Device according to claim 3 or 4, characterized in that the detector (4) comprises

a detector cell (17) in the form of a hollow cylinder,

an anode (18) that is concentric with the detector cell and comprises a tubular part (22) surrounded by the detector cell,

an UV-lamp (16),

a holder (14), which holds and is concentric with the detector cell and the anode and fixes the UV-lamp, the detector cell and the anode in a gastight way to each other by means of screw joints (19, 25) and intermediate insulations (15), for instance of Teflon,

an element (23) connecting the column (2) to the detector (4), said element being provided with a through-hole for the delivery of sample air from the column to the detector,

a direct-delivery tube (24), which is fixed to the anode and is in communication with the ambient air for direct delivery of sample air,

a suction tube (20), which connects a cavity of the detector cell with the air pump (5), both the suction tube (20) and the direct delivery tube (24) being insulated with tubing (21) for instance Teflon tubing, and constituting electric conduits for the ionization current that arises between the detector cell and the anode,

and a device positioned outside the detector (4), which device makes switching over or shutting off possible and with the help of which the sample air drawn in by means of the air pump (5) and furnished to the cavity of the detector cell through the tubular part (22) of the anode (18), can be taken either from the column (2) through the column connecting element (23) or directly from the ambient air through the direct-delivery tube (24) to be exhausted through the suction tube (20) after the detection thereof.

**Patentansprüche**

1. Verfahren für einen Gaschromatographen zur kontinuierlichen, automatischen qualitativen und quantitativen Luftanalyse, beispielsweise für die Bestimmung und den Nachweis von extrem kleinen Mengen von in der Luft vorliegenden Substanzen, wobei der Gaschromatograph einen Injektor, eine Vorkonzentrierstufe die ein Adsorbens aufweist, eine Heizeinrichtung für das Heizen des Adsorbens um die adsorbierten Substanzen zu desorbieren, eine Chromatograph-Kolonne, einen Detektor, einen Rechner für die Steuerung des Gaschromatographen und für die Bearbeitung und Wiedergabe der Analysenergebnisse und eine Energieversorgungseinheit aufweist, dadurch gekennzeichnet, daß die Luftprobe kontinuierlich und mit einer konstanten Geschwindigkeit durch den Injektor, die Vorkonzentrierstufe, die das Adsorbens aufweist, die Kolonne und den Detektor geleitet wird, während welcher Zeitperiode die in der Luft befindlichen Substanzen auf dem Adsorbens in der Vorkonzentrierstufe adsorbiert werden, wodurch die Luft gereinigt und dan als Trägergas durch die Kolonne und den Detektor verwendet wird, und daß dann das Adsorbens kurz erhitzt wird, so daß die Substanzen, die an dem Adsorbens in der Vorkonzentrierstufe konzentriert worden sind, desorbiert werden und durch das Trägergas, welches aus Probenluft besteht, die zuvor in der Vorkonzentrierstufe gereinigt wurde, durch die Kolonne und den Detektor zur Analyse geführt werden, gleichzeitig als neue Probenluft durch den Injektor und das Adsorbens in der Vorkonzentrierstufe geleitet wird, und daß dieser Ablauf von Schritten während dieser Zeitperiode wiederholt wird, wodurch ein kontinuierliches Erfassungs- und Analyseverfahren erreicht wird.

2. Verfahren nach Anspruch 1, dadurch gekennzeichnet, daß die Probenluft kontinuierlich und mit einer konstanten Geschwindigkeit mittels einer hinter dem Detektor angeordneten Luftpumpe durch den Injektor, die Vorkonzentrierstufe, die Kolonne und den Detektor gesaugt wird.

3. Vorrichtung zur Ausführung des Verfahrens nach Anspruch 1 oder 2, wobei ein Injektor (1), der auch als eine Vorkonzentrierstufe für diejenigen Substanzen, die zu analysieren sind, arbeitet, welcher Injektor ein Adsorbens (8) aufweist, das kurz erhitzt werden kann, um die daran adsorbierten Substanzen zu desorbieren; ein temperaturgeregelter, mit einem Ventilator ausgestatteter Ofen (3), welcher eine Kapillarkolonne (2) und einen Detektor (4) aufweist; ein Mikrocomputer (6) für die Steuerung der Vorrichtung und für die Bearbeitung und Wiedergabe von Analysenergebnissen; und eine Energieversorgungsvorrichtung (7) vorgesehen sind, dadurch gekennzeichnet, daß hinter dem Detektor (4) eine Luftpumpe (5) vorgesehen ist, die Probenluft mit einer konstanten Geschwindigkeit über Strömungswiderstände und Puffervolumina durch den Injektor (1), die Kapillarkolonne (2) und den Detektor (4) saugt, und daß die in der Probe vorhandene Luft ein Trägergas durch die Kapillarkolonne und den Detektor für diejenigen Substanzen bildet, die zu analysieren sind.

4. Vorrichtung nach Anspruch 3, dadurch gekennzeichnet, daß der Injektor (4) ein Adsorbtionsmaterial (8) in Pulverform aufweist, das mittels zweier Glaswollstopfen (9) in einem dünnwandigen Glasrohr (10) zusammengehalten wird, welches Rohr mit einem spiraligen Widerstandsdraht (11) fest unwickelt ist, und daß die Enden des Widerstandsdrahtes an dem Glasrohr (10) mittels zweier Metallringe (12) befestigt sind, welche Ringe zugleich als elektrische Verbindungen dienen, durch welche Strom augeführt wird und in kurzer Zeit der Widerstandsdraht, das Glasrohr und das Adsorbtionsmaterial erhitzt wird.

5. Vorrichtung nach Anspruch 3 oder 4, dadurch gekennzeichnet, daß der Detektor (4)

eine Detektorzelle (17) in Form eines Hohlzylinders,

eine Anode (18), die konzentrisch mit der Detektorzelle ist und ein röhrenförmiges Teil (22) aufweist, welches von der Detektorzelle umgegeben ist,

eine UV-Lampe (16),

einen Halter (14), der die Detektorzelle und die Anode hält und konzentrisch mit diesen ist und die UV-Lampe, die Detektorzelle und die Anode in einer gasdichten Weise aneinander mittels Schraubverbindungen (19, 25) und Zwischendichtungen (15), beispielsweise aus Teflon, festhält,

ein Element (23), welches die Kolonne (2) mit dem Detektor (4) verbindet, wobei das Element mit einem Durchgangsloch für die Abgabe von Probenluft von der Kolonne an den Detektor ausgestattet ist,

ein Direktabgaberohr (24), welches an der Anode befestigt ist und mit der Umgebungsluft für die Direktabgabe von Probenluft in Verbindung steht,

ein Saugrohr (20), das einen Hohlraum der Detektorzelle mit der Luftpumpe (5) verbindet, wobei das Saugrohr (20) und das Direktabgaberohr (24) mit Röhrenmaterial (21), beispielsweise Teflon-Röhrenmaterial, isoliert sind, und elektrische Leitungen für den Ionisationsstrom bilden, der zwischen der Detektorzelle und der Anode auftritt, und

eine Vorrichtung, die ausserhalb des Detektors (4) angeordnet ist, welche das Umschalten oder Abschalten möglich macht und mit deren Hilfe die mittels der Luftpumpe (5) angesaugte und über das röhrenförmige Teil (22) den Anode (18) zu dem Hohlraum der Detektorzelle abgegebene Probenluft entweder aus der Kolonne (2) durch das Kolonnenverbindungselement (23) oder direkt aus der Umgebungsluft durch das Direktabgaberohr (24) genommen ist und nach der Analyse über das Saugrohr (20) entleert ist, aufweist.

## Revendications

1. Procédé convenant pour l'emploi d'un chromatographe à gaz, pour l'analyse automatique en continu, qualitative et quantitative de l'air, par exemple pour le détermination et l'identification de quantités extrêmement faibles de substances présentes, dans l'air, le chromatographe à gaz comprenant un injecteur, un étage de pré-concentration comportant un adsorbant, des moyens de chauffage destinés à chauffer l'adsorbant en vue de désorber les substances adsorbées, une colonne de chromatographe, un détecteur, un ordinateur pour le réglage du chromatographe à gaz, le préparation et la présentation des résultats d'analyses et une unité d'alimentation de courant, caractérisé en ce que l'air de l'échantillon est envoyé en continu et à vitesse constante à travers l'injecteur l'étage de pré-concentration comprenant l'adsorbant, la colonne et le détecteur, cependant que durant cette période de temps, lesdites substances présentes dans l'air sont adsorbées sur l'adsorbant dans l'étage de pré-concentration, de façon que l'air soit purifié et soit alors utilisé comme gaz vecteur à travers la colonne et le détecteur, et en ce que l'adsorbant est ensuite brièvement chauffé de façon que les substances qui se sont concentrées sur l'adsorbant dans l'étage de pré-concentration soient désorbées et transportées par le gaz vecteur comprenant l'air de l'échantillon préalablement purifié dans l'étage de pré-concentration, à travers la colonne et le détecteur en vue de leur analyse, en même temps que de l'air renouvelé de l'échantillon est envoyé à travers l'injecteur et l'adsorbant dans l'étage de pré-concentration, ce cycle d'opérations durant ladite période de temps étant répété de manière à obtenir un procédé d'échantillonnage et d'analyses en continu.

2. Procédé selon la revendication 1, caractérisé, en ce que l'air l'échantillon est aspiré en continu et à vitesse constante à travers l'injecteur, l'étage de pré-concentration, la colonne et le détecteur, au moyen d'une pumpe à air disposée après le détecteur.

3. Dispositif pour la mise en oeuvre du procédé selon la revendication 1 ou 2, comprenant un injecteur (1), fonctionnant également comme étage de pré-concentration pour les substances à analyser, cet injecteur comprenant un adsorbant (8) qui peut être brièvement chauffe en vue de désorber les substances adsorbées; un four (3) à température contrôlée et équipé d'un ventilateur, comprenant un colonne capillaire (2) et un détecteur (4); un micro-ordinateur (6) pour le réglage du dispositif et la préparation et la présentation des résultats d'analyse; et un dispositif d'alimentation de courant (7), caractérisé en ce qu'il est prévu, après le détecteur (4), une pompe à air (5) qui aspire l'air de l'échantillon à vitesse constante par l'intermédiaire de résistances d'écoulement et de volumes-tampons, à travers l'injecteur (1), la colonne capillaire (2) et le détecteur (4), l'air présent dans l'échantillon formant un gas vecteur à travers la colonne capillaire et le détecteur, pour les substances à analyser.

4. Dispositif selon la revendication 3, caractérisé en ce que l'injecteur (1) comprend un matériau adsorbant (8) sous forme de poudre, maintenu au moyen de deux tampons de laine de verre (9), dans un tube de verre à paroi mince (10), ce tube comportant un fil de résistance (11) conformé en spirale, enroulé serré autour du tube, les extrémités du fil de résistance étant fixées au tube de verre (10) au moyen de deux bagues métalliques (12), ces bagues servant en même temps de connexions électriques à travers lesquelles un courant est envoyé au fil de résistance pour chauffer, en un temps très court, ce fil de résistance, le tube de verre et le matériau adsorbant.

5. Dispositif selon la revendication 3 ou 4, caractérisé en ce que le détecteur (4) comprend:

— une cellule de détecteur (17) sous la forme d'un cylindre creux,

— une anode (18), concentrique à la cellule du détecteur et comprenant une pièce tubulaire (22) entourée par la cellule du détecteur,

— une lampe UV (16),

— un support (14), qui maintient et qui est disposé concentriquement à la cellule du détecteur et à l'anode, de manière à fixer mutuellement la lampe UV, la cellule du détecteur et l'anode, tout en assurant l'étanchéité au gaz, au moyen d'assemblages à vis (19, 25) et de pièces isolantes intermédiaires (15), par exemple en Teflon,

— un élément (23) raccordant la colonne (2) au détecteur (4), ledit élément présentant un trou traversant, destiné à amener l'air de l'échantillon, de la colonne au détecteur,

— un tube d'alimentation directe (24), fixé à l'anode et en communication avec l'air ambiant destiné à amener directement l'air de l'échantillon,

— un tube d'aspiration (20), reliant une cavité de la cellule du détecteur à la pompe à air (5), ledit tube d'aspiration (20) et le tube d'alimentation directe (24) étant tous deux isolés par une gaine (21), par exemple en Teflon, et constituant des conduits électriques pour le courant d'ionisation qui se produit entre la cellule du détecteur et l'anode,

— un dispositif monté à l'extérieur du détecteur (4), permettant une commutation ou une fermeture, et à l'aide duquel l'air de l'échantillon, aspiré par la pompe à air (5) et envoyé dans la cavité de la cellule du détecteur, à travers la pièce tubulaire (22) de l'anode (18), peut être soutiré, soit à partir de la colonne (2) par l'élément de raccordement (23) à cette colonne, soit directement dans l'air ambiant, par le tube d'alimentation directe (24) pour être refoulé, après détection, par le tube d'aspiration (20).

Fig. 1

0 091 928

Fig.2

Fig.3

2

Fig. 4

SAMPLE 1

SAMPLE 2

SAMPLE 3

SAMPLE 4

SAMPLE 5     ETC.

→ TIME

☐ SAMPLING

■ DESORPTION OF SAMPLE

▨ ANALYSIS AND
RESULT PRESENTATION

0 091 928